# EUROPEAN PATENT APPLICATION

(11) **EP 1 084 612 A1**
(43) Date of publication of application: **21.03.2001**
(21) Application number: 00119556.9
(22) Date of filing: 07.09.2000
(51) Int. Cl.: A01K 5/00

(54) **Cutter-mixer wagon with vertical axis for fodder and grass silage having adjustable unloading means**

(30) Priority: 13.09.1999 IT VI990078 U
(71) Applicant: Loppoli, Giuseppe, 35010 Grantorto (PD) (IT)
(72) Inventor: Loppoli, Giuseppe, 35010 Grantorto (PD) (IT)
(74) Representative: Bonini, Ercole

(57) **Abstract**

Cutter-mixer wagon (1) for fodder and grass silage, comprising: a cutting-mixing screw (2) constituted by a container (3), the inside of which is provided with a helical element (6) whose conical profile converges upwards, said helical element rotating around a shaft (7) that defines a substantially vertical longitudinal rotation axis (Y), a base (4) resting on wheels (5) and supporting the screw (2), and an unloading mouth (8) for the processed material, obtained in the lateral wall (3b) of the container. Under the bottom (3c) of the container (3) and in correspondence with the unloading mouth (8) there is a conveyor belt (11) supported by a frame (12) connected to moving means (13) suitable for positioning it in a projecting position and with variable inclination with respect to the container (3).

## Description

The invention concerns a cutter-mixer wagon for fodder and grass silage, provided with a cutting-mixing screw with vertical axis and with a conveyor belt for the unloading of the cut and mixed material at adjustable heights.

It is already known that cutter-mixer wagons are equipment for the cutting and mixing of hay, fodder and grass silage suitable for feeding livestock.

According to the known applications, they comprise a screw with vertical axis consisting of a preferably cylindrical or truncated cone-shaped container, the inside of which is provided with a helical element with cutting blades.

The helical element is wound around a revolving shaft that defines the vertical longitudinal axis of the screw and is operated by the tractor engine, for example through a cardan-joint transmission.

The screw is supported by a frame provided with wheels and coupling means for the connection to a towing vehicle, like for example a tractor.

The upper part of the container is provided with a loading mouth through which the silage that must be cut and mixed is introduced, while at the side there are one or more openings for the unloading of the cut and mixed material.

The drawback of the cutter-mixer wagons of the described type is represented by the fact that the conveyance of the material towards the outlet takes place starting from the unloading mounth, which practically corresponds to the bottom of the container.

Therefore, it is not possible to vary the unloading height of the processed material, for example in such a way as to convey it into the mangers, which can be positioned at different heights and sometimes higher than the bottom of the container.

The aim of the present invention is to overcome the drawback described above by implementing a cutter-mixer wagon with vertical axis for fodder and grass silage that is provided with unloading means suitable for varying the unloading height of the material itself.

The above mentioned aim has been achieved through the implementation of a cutter-mixer wagon for fodder and grass silage that, according to the main claim, comprises:
- cutting-mixing screw constituted by a container with an upper opening facing upwards, the inside of said container being provided with a helical element whose conical profile converges towards said upper opening, said helical element rotating around a shaft that defines a substantially vertical longitudinal rotation axis;
- a screw support base resting on wheels;
- a drawbar;
- at least one unloading mouth for the processed material, obtained in the lateral wall of said container,
and is characterized in that said container is provided with at least one conveyor belt for the distribution of the processed material outside the wagon, said belt being positioned on a support frame slidingly connected to said container under the bottom of said container and in correspondence with said unloading mouth, said frame being connected to moving means suitable for positioning said frame together with said belt in a projecting position with respect to said container.

According to a favourite application of the invention, the frame supporting the conveyor belt is slidingly connected to the container by means of a pair of rails arranged externally at the bottom of the container, parallel and spaced from each other.

Each rail is provided with a guide slot to which an idle roller integral with the frame is slidingly connected, and said roller makes it possible to keep the frame constrained to the container when this is moved to a projecting position through the operation of the moving means.

Moving means connected to the frame and preferably constituted by an hydraulic jack make it possible to position the frame and the conveyor belt in a projecting position with respect to the bottom of the container and inclined with respect to the ground.

To advantage, through the conveyor belt of the invention it is possible to unload the cut and mixed material conveyed out of the wagon at different heights.

Still to advantage, therefore, the cutter-mixer wagon object of the invention is used to fill mangers positioned at different distances from the ground. The mentioned aims and advantages will be highlighted in greater detail in the description of one among many possible applications of the invention in question, illustrated in the attached drawings, wherein:
- Fig. 1 is an axonometric view of the cutter-mixer wagon of the invention;
- Fig. 2 and 3 are two partial side views of the wagon of Fig. 1 with the cut material conveying device in two different operating positions.

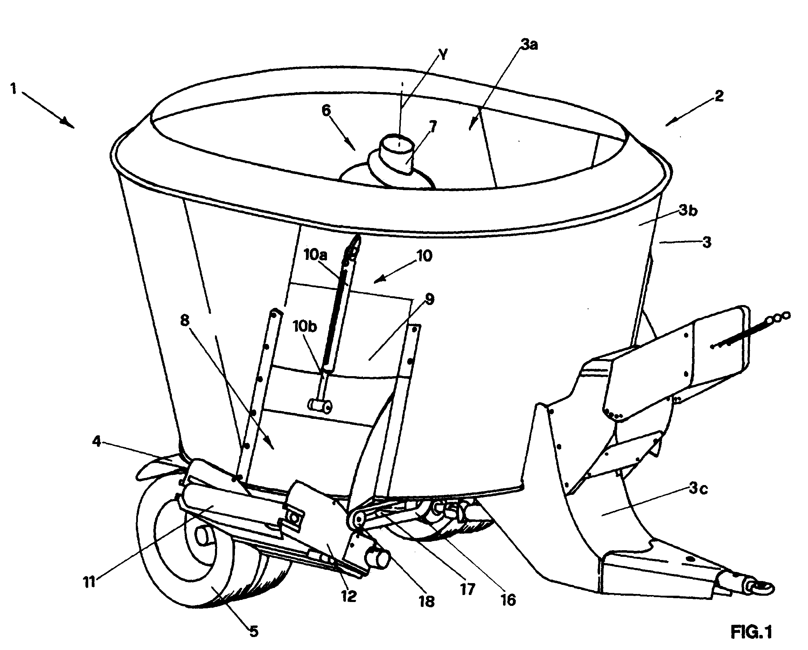

As shown in Fig. 1, the cutter-mixer wagon of the invention, indicated as a whole by 1, comprises a cutting-mixing screw, indicated as a whole by 2, constituted by a container 3 with the upper opening 3a facing upwards, supported by a base 4 resting on wheels 5, the inside of said container being provided with a helical element 6 whose conical profile converges towards the upper opening 3a, said helical element rotating around a shaft 7 that defines a substantially vertical longitudinal rotation axis Y.

A drawbar 3c makes it possible to attach the container 3 to a pulling vehicle.

The container 3 is provided ― on its lateral surface 3b ― with an unloading mouth, indicated as a whole by 8.

The unloading mouth 8 can be closed by means of a gate 9 that can be lifted vertically through a preferably hydraulic actuator 10 comprising a rod 10a hinged to the container 3, in which another rod 10b hinged to the gate 9 slides. According to the invention, said container 3 is provided with a conveyor belt 11 for the unloading of the processed material outside the wagon, said belt being positioned on a support frame 12 slidingly connected to said container 3 under said unloading mouth 8 and connected to moving means 13 suitable for positioning said frame 12 together with said belt 11 in a projecting position with respect to said container 3.

It can be observed, in particular, that the conveyor belt 11 is wound like a closed ring between a pair of cylinders, 14 and 15 respectively, and defines a longitudinal axis X for the advancement of the material that is positioned onto it.

At least one of the cylinders 14, 15 is motor-driven and is set rotating preferably by devices belonging to the vehicle that pulls the wagon.

It can also be observed that the frame 12 is slidingly connected to the bottom 3d of the container 3 through a pair of rails, only one of which is visible in the figures and indicated by 16, parallel to each other and positioned outside the wagon in correspondence with its bottom 3d.

Each rail is provided with a guide slot 17 to which an idle roller 18, integral with the frame 12, is slidingly connected.

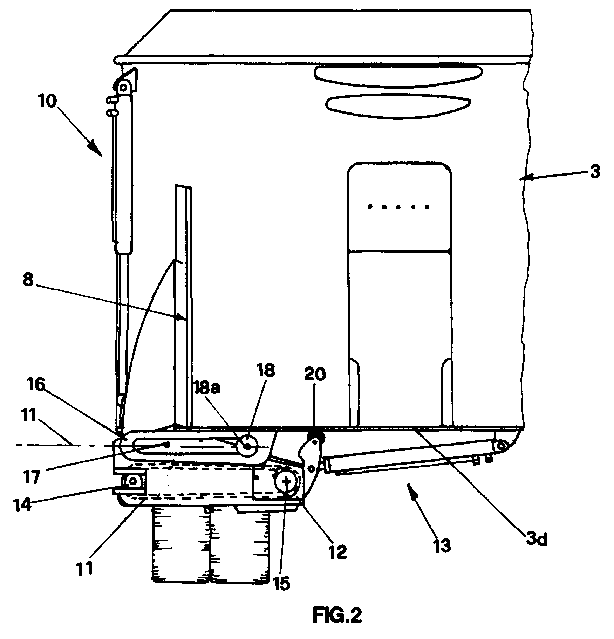

Furthermore, the frame 12 is provided with a shoe 20 that strikes against the bottom 3d of the container when the frame 12 is completely back in the position illustrated in Figure 2. The shoe 20 constitutes the contact point that prevents the rotation of the frame 12 around the idle roller 18 and therefore maintains it substantially parallel to the ground.

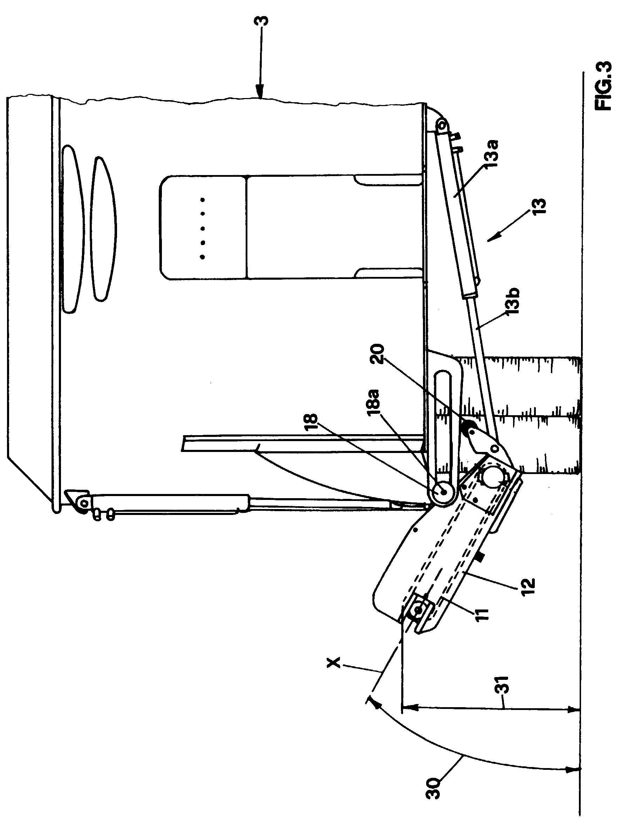

From an operational point of view, when the processed material must be unloaded from the container 3, the gate 9 is opened through the hydraulic jack 10 and the moving means 13 position the frame 12 and the conveyor belt 11 supported by it in an inclined position with respect to the ground, as shown in Figure 3.

This takes place since the thrusting action of the rod 13b coming out of the cylinder 13a makes the frame 12 slide horizontally until the idle roller 18 reaches the end of stroke on the guide slot 17. Through the prolonged thrust, the frame 12 rotates around the idle roller 18 and reaches an inclined position with respect to the ground, as shown in Fig. 3.

The degree of inclination 30 of the longitudinal axis X with respect to the ground depends on the position of the rod 13b, and the inclination is maximum when the rod 13b slides completely out of the cylinder 13a.

During the sliding and inclination movement, the idle roller 18 also maintains the connection of the frame 12 with the container 3.

In this way, by adjusting the stroke of the rod 13b, it is possible to adjust the unloading height 31 of the conveyor belt 11, adapting it to the user's needs. As it can be observed in Fig. 2, the possibility of moving the conveyor belt completely under the bottom 3d of the container 3, reduces the space occupied and facilitates the handling of the wagon.

Obviously, upon implementation the conveyor 11 used may be of any type, that is, with belt, slats or other elements.

Furthermore, the support frame, the rails that connect it to the bottom of the wagon and the guide and inclination systems may also be different from those described herein.

It is understood, however, that any changes that may be made on the invention upon implementation are all included in the inventive concepts expressed in the following claims and are therefore to be considered protected by the patent.

## Claims

1. Cutter-mixer wagon (1) for fodder and grass silage, comprising:
- a cutting-mixing screw (2) constituted by a container (3) with an upper opening (3a) facing upwards, the inside of said container being provided with a helical element (6) whose conical profile converges towards said upper opening (3a), said helical element rotating around a shaft (7) that defines a substantially vertical longitudinal rotation axis (Y);
- a support base (4) for the screw (2), resting on wheels (5);
- a drawbar (3c);
- at least one unloading mouth (8) for the processed material, obtained in the lateral wall (3b) of said container,
**characterized in that** said container (3) is provided with at least one conveyor belt (11) for the unloading of the processed material outside the wagon, said belt being positioned on a support frame (12) slidingly connected to said container (3) under the bottom (3c) of said container (3) and in correspondence with said unloading mouth (8), said frame (12) being connected to moving means (13) suitable for positioning said frame (12) together with said belt (11) in a projecting position with respect to said container (3).

2. Cutter-mixer wagon (1) according to claim 1), **characterized in that** said support frame (12) is slidingly connected to said container (3) through a pair of rails (16) parallel to each other and positioned externally at the bottom (3d) of said container (3) and spaced from each other.

3. Cutter-mixer wagon (1) according to claim 2), **characterized in that** each one of said rails (16) is provided with a guide slot (17) to which an idle roller (18) is slidingly coupled, and wherein said idle roller is connected to said support frame (12) in turn connected to said moving means (13).

4. Cutter-mixer wagon (1) according to claim 1), **characterized in that** said frame (12) is provided with a shoe (20) that strikes against said bottom (3d) of said container (13) to maintain the longitudinal axis (X) of said conveyor belt (11) substantially parallel to the ground when said frame (12) is positioned under said bottom (3d).

5. Cutter-mixer wagon (1) according to claim 3), **characterized in that** said moving means (13) comprise a cylinder (13a) hinged with one end to said bottom (3d) of said container (3) and a rod (13b) slidingly connected to said cylinder (13a) and having the end hinged to said frame (12), said rod (13b) being suitable for making said frame (12) rotate around said idle roller (18) positioned at the end of stroke in said guide slot (17), in such a way as to position the longitudinal axis (X) of said conveyor belt (11) inclined with respect to the ground.
